# EUROPEAN PATENT APPLICATION

(11) **EP 3 144 525 A1**
(43) Date of publication of application: **22.03.2017**
(21) Application number: 15185408.0
(22) Date of filing: 16.09.2015
(51) Int. Cl.: F03D 1/06

(54) **WIND TURBINE ROTOR BLADE AND THICK LEADING EDGE SHELL**

(71) Applicant: Siemens Aktiengesellschaft, 80333 München (DE)
(72) Inventor: Enevoldsen, Peder Bay, 7100 Vejle (DK); Fuglsang, Peter, 7100 Vejle (DK); Laursen, Jesper Monrad, 8600 Silkeborg (DK); Vinther, Soeren, 7400 Herning (DK)

(57) **Abstract**

The invention relates to an arrangement (40) comprising a rotor blade (20) of a wind turbine (10) and a thick leading edge shell (30) for protection against erosion. The rotor blade (20) has the shape of an airfoil, thus comprising a suction side (25), a pressure side (26), a leading edge section (24) and a trailing edge section (23). The leading edge shell (30) at least partially covers the leading edge section (24) of the rotor blade (20). The leading edge shell (30) comprises a main part (31), backward facing ends (321, 331), wherein the backward facing ends (321, 331) are directed towards the trailing edge section (23) of the rotor blade (20), and backward facing end sections (32, 33), wherein the backward facing end sections (32, 33) surround the backward facing ends (321, 331). The thickness (34) of the leading edge shell (30) exceeds five hundred micrometer at least in a part of the main part (31), and the thickness (34) of the leading edge shell (30) gradually decreases in at least one of the backward facing end sections (32, 33), such that the leading edge shell (30) smoothly transitions into the surface of the rotor blade (20) and adverse aerodynamic and aero-acoustic effects at the backward facing ends (321, 331) of the leading edge shell (30) are mitigated. The invention furthermore relates to a cover for protecting at least one of the two backward facing end sections (32, 33) of the leading edge shell (30) during transportation and/or installation of such an arrangement (40). Finally, the invention relates to a wind turbine (10) for generating electricity comprising at least one such arrangement (40).

## Description

The invention relates to an arrangement comprising a rotor blade of a wind turbine and a thick leading edge shell. Furthermore, the invention relates to a cover for protecting the leading edge shell during transportation and/or installation of the arrangement. Finally, the invention relates to a wind turbine for generating electricity comprising at least one arrangement as mentioned.

Leading edge erosion is a commonly observed issue of rotor blades of a wind turbine. Erosion of parts of the rotor blades, in particular of the leading edge of the rotor blade, is mainly due to the fact that the rotor blades are operated under harsh weather conditions during many years of operation. Additionally, as rotor sizes of wind turbines increase ever more, tip speeds of the rotor blades increase as well. This aggravates the issues related to erosion.

A conventional approach to meet this challenge is the provision of leading edge protection foils for protecting the leading edge of the rotor blade. These leading edge protection foils, which can also be applied in several layers on the rotor blade, can be attached to the leading edge soon after manufacturing the rotor blade. Alternatively, these leading edge protection foils can be retrofitted on existing rotor blades. A problem of conventional leading edge protection foils is that they have to be renewed after a while, as they get damaged and eroded, too.

Therefore, the inventors came up with the idea of providing a thick leading edge shell in order to ensure a better and longer lasting protection of the leading edge. Unfortunately, a disadvantage of a leading edge shell with a thickness in the range of five hundred micrometer or more is that such a thickness implies a step at the backward facing ends of such a leading edge shell. As known from general aerodynamic and aero-acoustic principles, a sudden step of such a height may cause problems in terms of generation of turbulences at these backward facing steps. Depending on the concrete geometry of the rotor blade and, in particular, on the step at the backward facing ends of the leading edge shell, the decrease in efficiency caused by the generation of turbulences may be larger than what is gained by the ameliorated protection of the leading edge.

Thus, there exists the desire to provide a satisfying protection of the leading edge of a rotor blade without considerable losses of the aerodynamic efficiency of the rotor blade.

This problem is solved by the object of the independent claims. Advantageous embodiments and modifications are described in the dependant claims.

According to the invention, there is provided an arrangement comprising a rotor blade of a wind turbine and a thick leading edge shell for protection against erosion. The rotor blade has the shape of an airfoil, thus comprising a suction side, a pressure side, a leading edge section and a trailing edge section. The leading edge shell at least partially covers the leading edge section of the rotor blade. The leading edge shell comprises a main part, backward facing ends, wherein the backward facing ends are directed towards the trailing edge section of the rotor blade, and backward facing end sections, wherein the backward facing end sections surround the backward facing ends. The leading edge shell is characterized in that its thickness exceeds five hundred micrometer at least in a part of the main part, and its thickness gradually decreases in the backward facing end sections, such that the leading edge shell smoothly transitions into the surface of the rotor blade and upwards aerodynamic and aero-acoustic effects at the backward facing ends of the leading edge shell are mitigated.

The inventors have realized that an optimum protection of the leading edge of the rotor blade without, in return, having to accept losses of the aerodynamic efficiency or increase of the noise generated by the rotor blade can be achieved by providing a thick leading edge shell with smooth backward facing ends, such that the risk of generating turbulences or even flow separation is mitigated. With this concept, the advantages of a smooth transition at the backward facing end as it is known from conventional leading edge foils are combined with the advantages of a thick protective device at the leading edge of the rotor blade which is able to be resistant against erosion considerably longer than conventional leading edge protection foils.

As it is known for the person skilled in the art, a rotor blade of a wind turbine is a specific type of a lift generating device. Such a device having the shape of an airfoil is conventionally characterized by a trailing edge and a leading edge. The trailing edge and the leading edge divide the surface of the rotor blade into two areas, namely a suction side and a pressure side. The area around the trailing edge is referred to as the trailing edge section. Likewise, the area around the leading edge is referred to as the leading edge section.

The straight line connecting the leading edge and the trailing edge of an airfoil is referred to as the chord line. Note that the airfoil is referred to as a cross section taken at a specific spanwise position of the rotor blade. In other words, the rotor blade is characterized by a plurality of airfoils at different spanwise positions of the rotor blade. The span is defined as the line between the root section and the tip section of the rotor blade. Note that the cross section defining an airfoil is always taken perpendicular to the span of the rotor blade.

In particular, the trailing edge section is defined as the region around the trailing edge extending from the trailing edge which is defined as the one hundred percent chordwise position of an airfoil until ninety percent chordwise position. In other words, the "last" ten percent with respect to the chord length of an airfoil around the trailing edge is referred to as the trailing edge section. Likewise, the leading edge section is defined as the section between zero percent and ten percent chord length of an airfoil.

The leading edge shell covers at least a part of the leading edge section of the rotor blade. It may cover the entire chordwise area between zero percent and ten percent, i.e. the entire leading edge section with regard to its chordwise extension.

Additionally, the leading edge shell may cover the rotor blade along its entire length in spanwise direction. It may, however, also only cover parts of the leading edge section in spanwise direction.

In particular, the leading edge shell covers at least partially the leading edge section between sixty percent and one hundred percent spanwise positions. In other words, the leading edge shell covers with respect to its spanwise position the outer third of the rotor blade.

The leading edge shell may be divided into a main part and backward facing end sections. Therein, the backward facing end sections are defined as these sections of the leading edge shell which are directed towards the trailing edge section of the rotor blade.

In particular, a suction side backward facing end section and a pressure side backward facing end section can be determined. This is the case for those alternatives where the leading edge shell covers at least a part of the pressure side and at least a part of the suction side of the rotor blade. Note that the part of the leading edge section which belongs to the suction side is referred to as the leading edge section suction side and the part of the leading edge section which belongs to the pressure side is referred to as the leading edge section pressure side. Thus, in other words, the leading edge shell may comprise a suction side backward facing end section and a pressure side backward facing end section. Each backward facing end section comprises a backward facing end. Thus, there may exist a suction side backward facing end and a pressure side backward facing end. It is noted that the backward facing end is defined as this edge or rim or line of the backward facing end section which is closest to the trailing edge of the rotor blade.

One aspect of the inventive arrangement is that the thickness of the leading edge shell exceeds five hundred micrometer at least in a part of the main part of the leading edge shell. This signifies that not the entire main part needs to be as thick as at least five hundred micrometer. However, the main part has to be thicker than five hundred micrometer in at least a part of the main part. This ensures a profound and considerable protection of the leading edge section of the rotor blade. Advantageously, the main part of the leading edge shell, is thickened in these sections where considerable erosion is expected.

In an embodiment of the invention, the thickness of the leading edge shell exceeds one millimeter at least in a part of the main part, or it even exceeds 1.5 millimeter at least in a part of the main part.

The arrangement according to the invention is furthermore characterized in that the thickness of the leading edge shell gradually decreases in at least one of the two backward facing end sections. Thus, in the case that the leading edge shell comprises a suction side backward facing end section and a pressure side backward facing end section, the leading edge shell decreases in either the suction side backward facing end section or the pressure side backward facing end section or in both of the backward facing end sections. This decreasing thickness of the backward facing end section implies that the leading edge shell smoothly transitions into the surface of the rotor blade.

This has the technical effect and advantage that undesired aerodynamic and aero-acoustic effects at the backward facing ends are prevented, i.e. mitigated or even avoided at all.

In this context, "gradually" refers to any decrease which occurs in small steps or continuously. "Small steps" include step heights below one fifty micrometer, in particular below ten micrometer.

In an embodiment of the invention, the thickness of the leading edge shell even exceeds five hundred micrometer in the entire main part of the leading edge shell. This has the advantage that the whole area which is covered by the main part of the leading edge shell is covered by a protection means having more than five hundred micrometer thickness.

In another embodiment of the invention, the thickness of the leading edge shell is smaller than one hundred micrometer at least at one of the two backward facing ends.

As the skilled person is aware, it may be difficult and expensive to realize a perfectly smooth transition from the backward facing end sections to the surface of the rotor blade. Thus, an acceptable solution may be to ensure that the backward facing end comprises a step height which is smaller than one hundred micrometer. The value of one hundred micrometer is deliberately chosen according to experiments which have shown that undesired turbulences are minimum or not existing at all when the step height is smaller than one hundred micrometer.

Advantageously this minimum step height is realized at both backward facing ends. Alternatively, it may also be sufficient that this maximum step height is only realized at the suction side of the rotor blade as in this section undesired turbulences and flow separation have more adverse effects and impacts on the rotor blade than at the pressure side of the rotor blade.

In another embodiment of the invention, the thickness of the leading edge shell gradually decreases in the backward facing end sections at a rate of less than ten percent.

In other words, the decrease of the thickness of the leading edge shell is moderate. Thus it is avoided that undesired turbulences are created due to a steep or even abrupt decrease of the thickness in the backward facing end sections. In particular, rates of less than five percent or even less than two percent may be desired.

The rate of ten percent is defined as a decrease of the thickness of, for instance, ten micrometer at a downstream or chordwise extension of one hundred micrometer. In another example, respecting a rate of decrease of two percent at a thickness of the main part of 1.5 millimeter at the backward end of the main part would lead to a chordwise extension of the backward facing end section of 75 millimeters. Given the typical extensions of a rotor blade, 75 millimeters length of the backward facing end section are a realistic and feasible value.

In another embodiment of the invention, at least one of the two backward facing end sections of the leading edge shell is a piece which is pre-manufactured separately from the main part of the leading edge shell.

In other words, the leading edge shell comprises at least two separate pieces. These separate pieces are joined together after or while they are attached to the surface of the rotor blade.

An advantage of a pre-manufactured backward facing end section is that the decreasing thickness can be realized easier when manufactured separately compared to the case where it were made of one single piece together with the main part of the leading edge shell. This particularly is important with regard to the sharp edge of the backward facing end which may be easier to be handled if only the backward facing end section comprises this sharp backward facing end compared to the case that the whole leading edge shell is one piece with such a sharp edge.

In another embodiment, at least one of the two backward facing end sections of the leading edge shell is realized by applying a sealant at the respective backward facing end of the main part of the leading edge shell and shaping the applied sealant such that a backward facing end section with a gradually decreasing thickness is obtained.

In other words, the step which would result at the backward facing end if only the main part of the leading edge shell would be attached to the surface of the rotor blade is smoothened with a sealant or a similar product. Appropriate sealants may be a Sikaflex® silicone. The advantage of using a flexible and viscose sealant compared to a rigid pre-manufactured wedge-shaped backward facing end section is that the manufacturing tolerances which are quite small in the case of the pre-manufactured wedge-shaped backward facing end section are not necessary. In other words, the sealant may be applied in situ after attaching the main part of the leading edge shell to the surface of the rotor blade and can then be smoothened by an appropriate tool. In order to ensure a reliable and high quality smoothening ramp, a customized smoothening tool may be necessary.

In another embodiment of the invention, the leading edge shell comprising the main part and the two backward facing end sections are made of one single piece.

This has the advantage that on the one hand only one single part has to be attached and for example glued to the surface of the rotor blade. On the other hand, no undesired steps between the main part and the backward facing end sections are present.

In another embodiment of the invention, at least one of the two backward facing end sections of the leading edge shell comprises means for re-energizing and/or stabilizing a boundary layer of airflow downstream of the leading edge shell.

The idea behind the provision of these means is to further increase the aerodynamic efficiency of the rotor blade. Note that controlled vortices for the purpose of re-energizing or stabilizing the airflow downstream of the backward facing ends of the leading edge shell may be beneficial. Regarding the choice and the concrete design of these means for re-energizing and/or stabilizing the boundary layer, a variety of options exists.

A first option is the provision of dimples and/or grooves at the top surface of one or both backward facing end sections.

Other micro structures are possible, too. Regarding the grooves it is beneficial to provide longitudinal grooves, i.e. grooves which are aligned substantially in chordwise orientation of the airfoil.

Another option to boost the aerodynamic efficiency is the provision of a plurality of vortex generators of one or both backward facing end sections.

Note that these vortex generators are preferably designed and shaped as "mini"-vortex generators compared to conventional vortex generators which are typically located in the leading edge section or slightly downstream of the leading edge section on the suction side. The advantage of the provision of mini-vortex generators is the profound experience that exists with the application of vortex generators on wind turbine rotor blades.

These vortex generators may advantageously be arranged in a row, i.e. substantially parallel to the span of the rotor blade.

The vortex generators may for example be arranged close to the upstream end of the backward facing end section in proximity to the main part of the leading edge shell.

An alternative is to locate the mini vortex generators close to the backward facing ends of the backward facing end sections. This has the further advantage of a reduced drag of the mini-vortex generators.

Yet another example to boost the aerodynamic efficiency of the rotor blade is the provision of serrations at the backward facing end sections. In other words, at least one of the two backward facing ends comprises a serrated or undulated shape. This serrated or undulated shape has the advantage that this concept is well-proven in the field of wind turbine rotor blades. They are both used for increasing the efficiency and reducing the noise, mainly at the trailing edge section of the rotor blade. In the case of the backward facing end section of the leading shell, the serrated or undulated shape of the backward facing ends may advantageously re-energize or stabilize the boundary layer downstream of the backward facing ends.

Another aspect of the present invention is the provision of a cover for protecting at least one of the two backward facing end sections of a leading edge shell during transportation and/or installation of an arrangement according a rotor blade of a wind turbine and a thick leading edge shell as described above.

Such a cover is beneficial as the presented structures, i.e. in particular the backward facing end sections with, optionally, means for boosting the aerodynamic efficiency are sensitive. The shape is relatively small compared to the other dimensions on a rotor blade. During transportation and/or installation of the arrangement comprising the rotor blade and the leading edge shell, these fine structures are prone to damages. Such a cover might cover the whole leading edge shell or only the backward facing end sections.

Finally, the invention is also directed towards a wind turbine for generating electricity comprising at least one of the arrangements as described above.

Embodiments of the invention are now described by example only with the help of the accompanying drawings, of which:
- Figure 1: shows a wind turbine;
- Figure 2: shows a rotor blade of a wind turbine;
- Figure 3: shows an airfoil of a rotor blade with a thick leading edge shell;
- Figure 4: shows an enlargement of the leading edge shell, in particular of a part of the main part and one backward facing end section;
- Figure 5: shows a first mini-vortex generator arranged on the top surface of a backward facing end section of the leading edge shell;
- Figure 6: shows another embodiment with a mini-vortex generator on the top surface of a backward facing end section of the leading edge shell;
- Figure 7: shows a plurality of dimples on the top surface of a backward facing end section of the leading edge shell; and
- Figure 8: shows a leading edge shell with a backward facing end with an undulated shape.

The illustration in the drawings is in schematic form. It is noted that in different figures, similar or identical elements may be provided with the same reference signs.

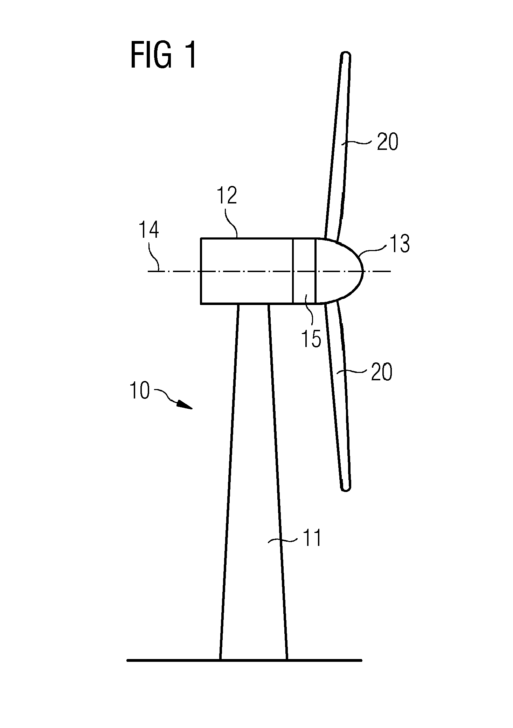

In Figure 1, a wind turbine 10 is shown. The wind turbine 10 comprises a nacelle 12 and a tower 11. The nacelle 12 is mounted at the top of the tower 11. The nacelle 12 is mounted rotatable with regard to the tower 11 by means of a yaw bearing. The axis of rotation of the nacelle 12 with regard to the tower 11 is referred to as the yaw axis.

The wind turbine 10 also comprises a hub 13 with three rotor blades 20 (of which two rotor blades 20 are depicted in Figure 1). The hub 13 is mounted rotatable with regard to the nacelle 12 by means of a main bearing. The hub 13 is mounted rotatable about a rotor axis 14.

The wind turbine 10 furthermore comprises a main shaft, which connects the hub 13 with a rotor of a generator 15. The hub 13 is connected directly to the rotor, thus the wind turbine 10 is referred to as a gearless, direct driven wind turbine. As an alternative, the hub 13 may also be connected to the rotor via a gearbox. This type of wind turbine is referred to as a geared wind turbine.

The generator 15 is accommodated within the nacelle 12. It comprises a generator rotor and a stator. The generator 15 is arranged and prepared for converting the rotational energy from the rotor into electrical energy.

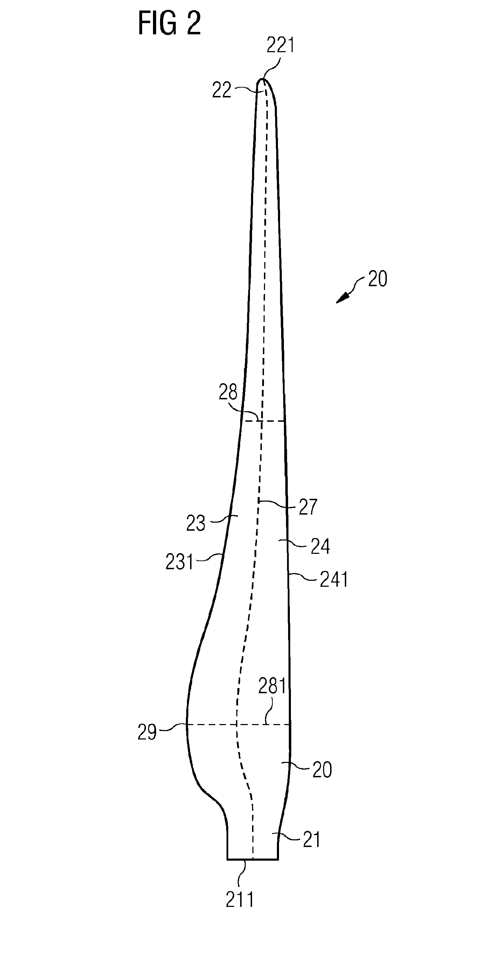

Figure 2 shows a rotor blade 20 of a wind turbine. The rotor blade 20 comprises a root section 21 with a root 211 and a tip section 22 with a tip 221. The root 211 and the tip 221 are virtually connected by the span 27 which follows the shape of the rotor blade 20. If the rotor blade were a rectangular shaped object, the span 27 would be a straight line. However, as the rotor blade 20 features a varying thickness, the span 27 is slightly curved or bent as well. Note that if the rotor blade 20 was bent itself, then the span 27 would be bent, too.

The rotor blade 20 furthermore comprises a leading edge section 24 with a leading edge 241 and a trailing edge section 23 with a trailing edge 231.

The trailing edge section 23 surrounds the trailing edge 231. Likewise, the leading edge section 24 surrounds the leading edge 241.

At each spanwise position, a chord line 28 which connects the leading edge 241 with the trailing edge 231 is defined. Note that the chord line 28 is perpendicular to the span 27. The shoulder 29 is defined as the region where the chord line 28 comprises a maximum chord length 281.

Furthermore, the rotor blade 20 can be divided into an inboard section which comprises the half of the rotor blade 20 adjacent to the root section 21 and an outboard section which comprises the half of the rotor blade 20 which is adjacent to the tip section 22. The inboard section is also referred to as the inner half, while the outboard section is also referred to as the outer half.

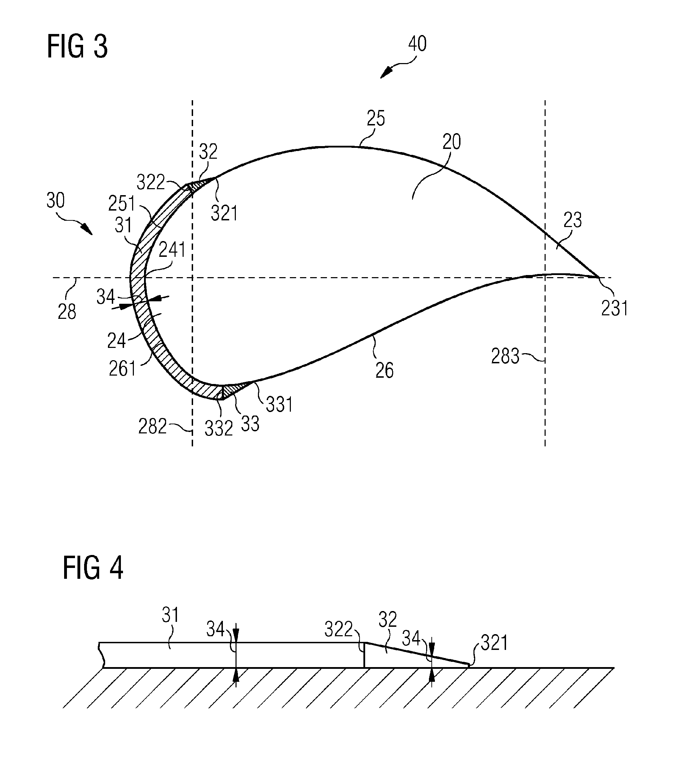

Figure 3 illustrates an airfoil of the rotor blade 20. An airfoil in general refers to a cross sectional view perpendicular to the span.

A leading edge shell 30 is attached to the rotor blade 20. The ensemble comprising the rotor blade 20 and the leading edge shell 30 is referred to as the arrangement 40. The airfoil comprises a suction side 25 and a pressure side 26. Both sides 25, 26 are separated from each other by the chord line 28. The chord line 28 intersects the outer surface of the rotor blade at the leading edge 241 and the trailing edge 231. In other words, the chord line 28 is the straight line between the leading edge 241 and the trailing edge 231. With regard to the chord line 28 chordwise positions may be defined.

In Figure 3, a first chordwise position 282 and a second chordwise position 283 are shown. The first chordwise position 282 is at ten percent of the chord line 28, as measured from the leading edge 241. The second chordwise position 283 is at ninety percent of the chord line 28, again as measured from the leading edge 241. Both chordwise positions 282, 283 define the leading edge section 24 and the trailing edge section 23 of the airfoil, respectively. In other words, it can be said that the trailing edge section 23 surrounds the trailing edge 231 in an area up to ten percent of the chord line 28. Likewise, the leading edge section 24 surrounds the leading edge 241 in a chordwise area of up to ten percent of the chord line 28.

The leading edge 30 consists of a main part 31, a suction side backward facing end section 32 and a pressure side backward facing end section 33. The whole and entire leading edge section 24 is covered by the leading edge shell 30.

The suction side backward facing end section 32 is limited towards the leading edge 241 by the upstream end 322 of the suction side backward facing end section 32. At the downstream end, i.e. at the end towards the trailing edge 231, the suction side backward facing end section 32 is limited by the suction side backward facing end 321. Likewise, the pressure side backward facing end section 33 is limited towards the leading edge 241 by the upstream end 332 of the pressure side backward facing end section 33, and by the pressure side backward facing end 331 towards the trailing edge 231. Both backward facing end sections 32, 33 are directly adjacent to the main part 31 of the leading edge shell 30. The avoidance of any gaps between the backward facing end sections 32, 33 and the main part 31 is preferred in order to avoid the generation of any turbulences and the like.

Likewise it is important that there is no step or, if there is a step, that this step be small. In particular, a step height between the downstream end of the main part 31 and the upstream ends 322, 332 of the backward facing end sections 32, 33 is preferred.

It can also be seen in Figure 3 that the thickness 34 of the main part 31 of the leading edge shell 30 is substantially constant. Exemplarily, this constant thickness may be in the range of 1.5 millimeter. Note that the sketch of Figure 3 is obviously not to scale.

The backward facing end sections 32, 33 feature a decreasing thickness from the upstream ends 322, 332 towards the backward facing ends 321, 331. This decreasing thickness favors a smoothening and a smooth transition with the surface of the rotor blade, which is in this case the suction side 25 and the pressure side 26. Such a smooth transition is essential for the inventive concept of mitigating the risk of aero-acoustic or aerodynamic adverse turbulences or even separation of the flow at the backward facing ends 321, 331.

Figure 4 shows an enlargement of a part of the main part 31 of the leading edge shell 30 and a backward facing end section. In particular, Figure 4 shows the suction side backward facing end section 32 comprising the suction side backward facing end 321 and the upstream end 322 of the suction side backward facing end section 32. Note that the thickness 34 of the main part 31 is relatively constant, while the thickness 34 of the backward facing end section 32 diminishes towards the suction side backward facing end 321. Also note that there is no significant step between the downstream end of the main part 31 and the upstream end 322 of the suction side backward facing end section 32. Also note that there is a certain step at the backward facing end 321 of the suction side backward facing end section 32. However, the height of this step is supposed to be less than one hundred micrometer. Experiments have shown that a step height of this dimension does typically not create turbulences of a significant and considerable extent.

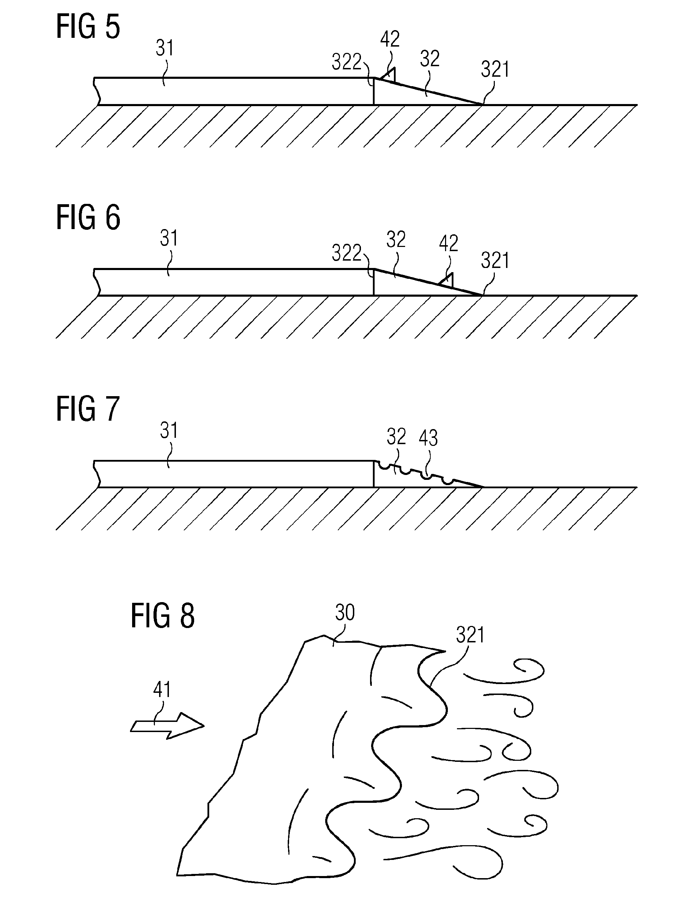

Figures 5 to 8 show several advantageous embodiments in order to further increase the aerodynamic and aero-acoustic efficiency of the rotor blade.

Figure 5 illustrates a vortex generator 42, a so-called "mini"-vortex generator, which is arranged close to the upstream end 322 of the suction side backward facing end section 32. This vortex generator 42 is arranged and prepared to deliberately generate vortices and turbulences in order to re-energize the boundary layer and the airflow of the boundary layer downstream of the suction side backward facing end section 32.

Figure 6 shows a similar embodiment, this time the vortex generator 42 being located close to the suction side backward facing end 321 instead of in proximity to the upstream end 322. This has a similar technical effect of re-energizing the boundary layer and has the further advantage of a reduced drag of the vortex generator 42.

Figure 7 shows a plurality of dimples 43 arranged on the top surface of the suction side backward facing end section 32. These dimples or comparable micro patterning of the top surface may also be able to re-energize the boundary layer of the airflow.

Finally, Figure 8 shows a part of a leading edge shell 30, wherein the backward facing end, in particular the suction side backward facing end 321 comprises an undulated, i.e. wavy, shape. This has the technical effect of providing a sheet of smaller vortices which are able to energize the boundary layer downstream of the leading edge shell 30. Note that in the example of Figure 8, the airflow 41 is coming from the left, and note that in the example as shown in Figure 8, the limit between the main part 31 and the suction side backward facing end section 32 of the leading edge shell 30 is not shown. This is particularly true if the main part 31 and the backward facing end sections of the leading edge shell are manufactured as one single piece. Then the division of the leading edge shell into a main part, a suction side backward facing end section and a pressure side backward facing end section is only a virtual division.

## Claims

1. Arrangement (40) comprising a rotor blade (20) of a wind turbine (10) and a thick leading edge shell (30) for protection against erosion,
wherein
- the rotor blade (20) has the shape of an airfoil, thus comprising a suction side (25), a pressure side (26), a leading edge section (24) and a trailing edge section (23),
- the leading edge shell (30) at least partially covers the leading edge section (24) of the rotor blade (20),
- the leading edge shell (30) comprises a main part (31), backward facing ends (321, 331), wherein the backward facing ends (321, 331) are directed towards the trailing edge section (23) of the rotor blade (20), and backward facing end sections (32, 33), wherein the backward facing end sections (32, 33) surround the backward facing ends (321, 331),
**characterized in that**
- the thickness (34) of the leading edge shell (30) exceeds five hundred micrometer at least in a part of the main part (31), and
- the thickness (34) of the leading edge shell (30) gradually decreases in at least one of the backward facing end sections (32, 33), such that the leading edge shell (30) smoothly transitions into the surface of the rotor blade (20) and adverse aerodynamic and aero-acoustic effects at the backward facing ends (321, 331) of the leading edge shell (30) are mitigated.

2. Arrangement (40) according to claim 1,
wherein the thickness (34) of the leading edge shell (30) exceeds five hundred micrometer in the entire main part (31) of the leading shell (30).

3. Arrangement (40) according to one of the preceding claims,
wherein the thickness (34) of the leading edge shell (30) is smaller than one hundred micrometer at least at one of the two backward facing ends (321, 331).

4. Arrangement (40) according to one of the preceding claims,
wherein the thickness (34) of the leading edge shell (30) gradually decreases in the backward facing end sections (32, 33) at a rate of less than ten percent.

5. Arrangement (40) according to one of the preceding claims,
wherein at least one of the two backward facing end sections (32, 33) of the leading edge shell (30) is a piece which is pre-manufactured separately from the main part (31) of the leading edge shell (30).

6. Arrangement (40) according to one of the preceding claims,
wherein at least one of the two backward facing end sections (32, 33) of the leading edge shell (30) is realized by applying a sealant at the respective backward facing end of the main part (31) of the leading edge shell (30) and shaping the applied sealant such that a backward facing end section with a gradually decreasing thickness (34) is created.

7. Arrangement (40) according to one of the preceding claims,
wherein the leading edge shell (30) is made of one single piece.

8. Arrangement (40) according to one of the preceding claims,
wherein at least one of the two backward facing end sections (32, 33) of the leading edge shell (30) comprises means for re-energizing and/or stabilizing a boundary layer of airflow downstream of the leading edge shell (30).

9. Arrangement (40) according to claim 8,
wherein at least one of the two backward facing end sections (32, 33) of the leading edge shell (30) comprises dimples (43) and/or grooves at its top surface.

10. Arrangement (40) according to one of the claims 8 or 9,
wherein at least one of the two backward facing end sections (32, 33) of the leading edge shell (30) comprises a plurality of vortex generators (42).

11. Arrangement (40) according to one of the preceding claims,
wherein at least one of the two backward facing ends (321, 331) of the leading edge shell (30) comprises a serrated or undulated shape.

12. Cover for protecting at least one of the two backward facing end sections (32, 33) of the leading edge shell (30) during transportation and/or installation of an arrangement (40) according to one of the preceding claims.

13. Wind turbine (10) for generating electricity comprising at least one arrangement (40) according to one of the claims 1 to 11.
